# EUROPEAN PATENT APPLICATION

(11) **EP 3 249 268 A1**
(43) Veröffentlichungstag der Anmeldung: **29.11.2017**
(21) Anmeldenummer: 16739793.4
(22) Anmeldetag: 20.01.2016
(51) Int. Cl.: F16J 15/32, F16C 33/78

(54) **NABENLAGER UND DICHTUNGSVORRICHTUNG DAFÜR**

(30) Priorität: 20.01.2015 CN 201510026786
(71) Anmelder: Schaeffler Technologies AG & Co. KG, 91074 Herzogenaurach (DE)
(72) Erfinder: ZHANG, Jianchang, Shanghai 201821 (CN); CHAI, Zhongdong, Shanghai 201804 (CN); HE, Chenxi, Hongkou Shanghai 200083 (CN)
(86) Internationale Anmeldenummer: PCT/CN2016/071457
(87) Internationale Veröffentlichungsnummer: WO 2016/116046

(57) **Zusammenfassung**

Die Erfindung betrifft ein Radnabenlager und dessen Dichtungsvorrichtung. Die Dichtungsvorrichtung des Radnabenlagers umfasst einen Innenring (3) und einen Außenring (1) des Radnabenlagers, ein ringförmiges Dichtungsteil (2) und einen Dichtungsstoppring (4), wobei der Dichtungsstoppring (4) am Innenring (3) befestigt ist und der Außenumfang des Dichtungsteils (2) am Außenring (1) befestigt ist. Der Innenteil des Dichtungsteils (2) weist einen Metallrahmen (23) auf, das Dichtungsteil (2) ist über den Metallrahmen (23) am Außenring befestigt und gleichzeitig ist am Dichtungsteil (2) am Metallrahmen (23) eine Dichtungslippenkante (21) angeordnet, wobei die Dichtungslippenkante (21) mit dem Dichtungsstoppring (4) intervenierend in Kontakt steht.

Erfindungsgemäß weist der Innenteil des Dichtungsteils (2) eine weitere Metallrahmenschicht (24) auf, die in Radialrichtung an der Innenseite des Metallrahmens (23) angeordnet ist, einen anderen Wärmeausdehnungskoeffizient aufweist als der Metallrahmen (23) und mit dem Metallrahmen (23) einen doppellagigen Metallrahmen (23, 24) bildet. Im Betrieb der Dichtungsvorrichtung kann der doppellagige Metallrahmen (23, 24) bei Temperaturveränderungen dynamisch die Stärke der Überlagerung zwischen der Dichtungslippenkante (22) und dem Dichtungsstoppring (4) regulieren.

## Beschreibung

### Gebiet der Erfindung

Die vorliegende Erfindung betrifft eine Dichtungsvorrichtung für ein Radnabenlager. Genauer betrifft die vorliegende Erfindung eine Radnabenlager-Dichtungsvorrichtung, wobei ein Dichtungsteil genutzt wird, um den Raum zwischen dem Innenring und dem Außenring eines Radnabenlagers abzudichten und wobei ein Dichtungsstoppring in Axialrichtung an der Außenseite des Dichtungsteils angeordnet ist. Weiterhin betrifft die vorliegende Erfindung ein Radnabenlager.

### Hintergrund der Erfindung

In Fahrzeugen verwendete Radnabenlager umfassen beispielsweise eine Dichtungsvorrichtung, die ein ringförmiges Dichtungsteil nutzt, das den Raum zwischen Außenring und Innenring abdichtet und das Eindringen von Fremdkörpern, wie z.B. Wasser und Staub, in den Innenteil des Lagers sowie das Entweichen von Schmieröl bzw. -fett verhindert. Außerdem ist, da bei Radnabenlagern der Innenring und der Außenring gegeneinander drehbar sein müssen, der Außenumfang des Dichtungsteils am Außenring befestigt und der Innenumfang des Dichtungsteils bildet zum Innenring einen Gleitkontakt.

Allerdings ist es nicht möglich, nur durch ein Abdichten des Raums zwischen Außenring und Innenring ausreichende Dichtungseigenschaften zu erzielen, die das Eindringen von Fremdkörpern von der Außenseite her sowie das Entweichen von Schmieröl bzw. -fett verhindern und es ist schwierig, zu verhindern, dass Öl bzw. Fett entweicht und dass Wasser und Staub aus dem Raum zwischen dem Innenumfang des Dichtungsteils und dem Innenring in den Innenteil des Lagers gelangen.

Um das Eindringen von Fremdkörpern vom Außenteil in das Radnabenlager zu verhindern, wird im Allgemeinen in Axialrichtung an der Außenseite des Dichtungsteils ein Dichtungsstoppring in Form einer Abschirmplatte angeordnet, wobei der Dichtungsstoppring am Innenring befestigt wird und der Innenumfang des Dichtungsteils mit dem Dichtungsstoppring in Kontakt steht.

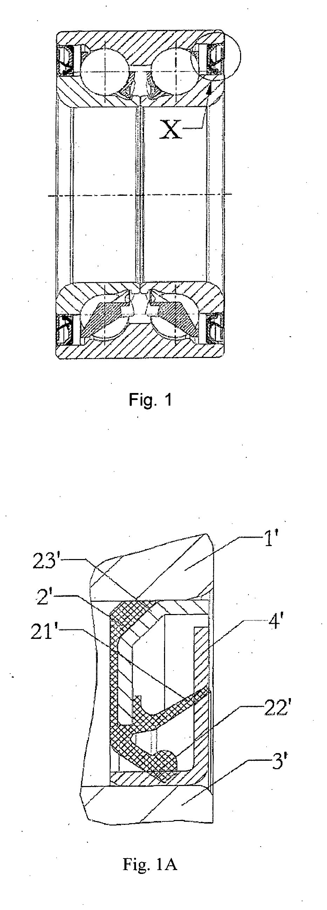

Figur 1 zeigt eine wie oben beschriebene übliche Radnabenlager-Dichtungsvorrichtung, wobei Figur 1 eine Schnittdarstellung eines Radnabenlagers des Stands der Technik zeigt und Figur 1A eine vergrößerte Darstellung des Teils X in Figur 1 zeigt. In Figur 1 ist das Radnabenlager ein doppelreihiges Kugellager, umfassend einen Außenring 1'; einen Innenring 3'; einen Käfig (nicht dargestellt) zum Halten der zwei Kugelreihen (nicht dargestellt); ein Dichtungsteil 2' zum Abdecken des abgegrenzten Raums zwischen dem Innenring 3' und dem Außenring 1'; und einen in Axialrichtung des Radnabenlagers an der Außenseite des Dichtungsteils 2' angeordneten Dichtungsstoppring 4'. Der Innenring 3', der Außenring 1', das Dichtungsteil 2' und der Dichtungsstoppring 4' bilden die Dichtungsvorrichtung des Radnabenlagers.

Wie in Figur 1A gezeigt, ist der Außenumfang des Dichtungsteils 2 am Außenring 1' befestigt und befindet sich zusammen mit dem Außenring 1' im ruhenden Zustand und der Dichtungsstoppring 4' wird am Innenring 3' befestigt und dreht sich mit dem Innenring 3'. In Figur 1A ist der Dichtungsstoppring 4' eine ringförmige Metallplatte, die zu einer L-Form gebogen ist, wobei ein Schenkel in Richtung auf den Innenteil des Radnabenlagers erstreckt und am Innenring 3' befestigt ist. Außerdem ist am Innenteil des Dichtungsteils 2' ein Metallrahmen 23' angeordnet, wobei der Metallrahmen 23' genutzt wird, um den Außenumfang des Dichtungsteils 2' am Außenring 1' zu befestigen und der Metallrahmen 23' des Dichtungsteils 2' durch Spritzgießen hergestellt eine erste radiale Dichtungslippenkante 22' und eine zweite axiale Dichtungslippenkante 21' aufweist, die beiden Dichtungslippenkanten jeweils in Radialrichtung und Axialrichtung des Radnabenlagers erstreckt sind und mit den beiden Schenkeln des L-förmigen Dichtungsstopprings 4' intervenierend in Kontakt stehen. Durch die Konfiguration des Grades des intervenierenden Kontakts zwischen den Dichtungslippenkanten und dem Dichtungsstoppring, d. h. die Stärke der Überlagerung, wird eine Dichtung realisiert, wobei die erste radiale Dichtungslippenkante 22' ein Entweichen von Öl bzw. Fett verhindert und die zweite axiale Dichtungslippenkante 21' das Eindringen von äußeren Verschmutzungen wie Wasser, Staub etc. in den Innenteil des Radnabenlagers verhindert.

In Radnabenlager-Dichtungsvorrichtungen des Stands der Technik bildet der Hauptkörper des Dichtungsteils gemeinsam mit dem Metallrahmen 23' das Dichtungsteil 2'.

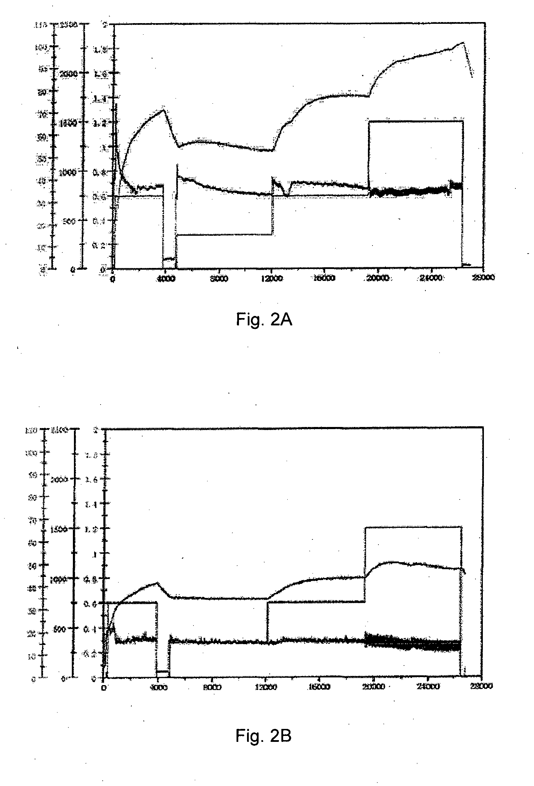

Bei üblichen Radnabenlagern mit einem wie oben beschriebenen Dichtungsteil 2' ist das Startdrehmoment relativ groß und erheblich größer als das Drehmoment im Betrieb. Wie in Figur 2A bis 2B gezeigt, beträgt das Betriebsdrehmoment eines Radnabenlagers mit einem Dichtungsteil 0,61 Nm, das Betriebsdrehmoment eines Radnabenlagers ohne Dichtungsteil beträgt 0,29 Nm, das Startdrehmoment eines Radnabenlagers mit Dichtungsteil beträgt 1,35 Nm und das Startdrehmoment eines Radnabenlagers ohne Dichtungsteil beträgt 0,43 Nm. Daraus lässt sich ableiten, dass das durch das Dichtungsteil verursachte Startdrehmoment 0,92 Nm beträgt und damit das 2,14-fache eines Radnabenlagers ohne Dichtungsteil erreicht. Der Grund dafür ist, dass beim Start des Lagers wegen des intervenierenden Kontakts zwischen den Dichtungslippenkanten und dem Dichtungsstoppring ein relativ großes Reibungsdrehmoment verursacht wird.

Darüber hinaus nimmt wegen der unzureichenden Schmierung beim Start das vom Dichtungsteil verursachte Reibungsdrehmoment einen größeren Anteil am Startdrehmoment des Radnabenlagers ein. Damit ist wegen des größeren Startdrehmoments der Start schwieriger und somit benötigen übliche Radnabenlager eine leistungsfähigere Startvorrichtung, was Einfluss auf die Eigenschaften des Radnabenlagers hat.

### Aufgabe der Erfindung

Ausgehend von den Lösungen des Standes der Technik liegt der Erfindung deshalb die Aufgabe zu Grunde, eine verbesserte Radnabenlager-Dichtungsvorrichtung anzugeben.

### Beschreibung der Erfindung

Die vorliegende Erfindung stellt eine Radnabenlager-Dichtungsvorrichtung bereit, umfassend einen Innenring und einen Außenring des Radnabenlagers, ein ringförmiges Dichtungsteil und einen Dichtungsstoppring, wobei der Dichtungsstoppring am Innenring befestigt ist und der Außenumfang des Dichtungsteils am Außenring befestigt ist. Im Innenteil des Dichtungsteils ist ein Metallrahmen angeordnet, der genutzt wird, um den Außenumfang des Dichtungsteils am Außenring zu befestigen und am Dichtungsteil sind am Metallrahmen jeweils eine radiale und eine axiale Dichtungslippenkante angeordnet, die jeweils in Radialrichtung bzw. Axialrichtung des Radnabenlagers erstreckt sind und mit Dichtungsstoppring intervenierend in Kontakt stehen. Diese Radnabenlager-Dichtungsvorrichtung zeichnet sich erfindungsgemäß dadurch aus, dass der Innenteil des Dichtungsteils außerdem eine weitere Metallrahmenschicht aufweist, die in Radialrichtung an der Innenseite des Metallrahmens angeordnet ist und einen anderen Wärmeausdehnungskoeffizient aufweist als der Metallrahmen und die mit dem Metallrahmen einen doppellagigen Metallrahmen bildet, wobei der doppellagige Metallrahmen so konstruiert ist, dass er verwendet werden kann, um im Betrieb der Dichtungsvorrichtung bei einer Temperaturveränderung die Stärke der Überlagerung zwischen der radialen und der axialen Dichtungslippenkante und dem Dichtungsstoppring dynamisch zu regulieren.

Gemäß einem Ausführungsbeispiel der vorliegenden Erfindung ist der doppellagige Metallrahmen so konstruiert, dass sich bei einem Temperaturanstieg die Stärke der Überlagerung zwischen den Dichtungslippenkanten und dem Dichtungsstoppring erhöht.

Im Vergleich zu üblichen Radnaben-Dichtungsvorrichtungen verwendet die Radnaben-Dichtungsvorrichtung der vorliegenden Erfindung einen doppellagigen Metallrahmen, der den allgemein verwendeten Metallrahmen ersetzt. Im Betriebsprozess verändert der doppellagige Metallrahmen mit einer Temperaturveränderung gleichzeitig den Grad des intervenierenden Kontakts zwischen der radialen und der axialen Dichtungslippenkante und dem Dichtungsstoppring, insbesondere in der Start- und in der Betriebsphase.

In der Startphase ist aufgrund der niedrigen Temperatur beim Start der Grad des intervenierenden Kontakts klein und damit das Reibungsdrehmoment klein und gleichzeitig wird das Schmieröl bzw. -fett sehr gut abgedichtet. Somit wird das Startdrehmoment des Radnabenlagers verringert und gleichzeitig die Staubschutz- und Dichtungswirkung gewährleistet.

In der Betriebsphase dagegen rotiert das Radnabenlager und die Temperatur ist hoch, es bildet sich ein guter Ölfilm, die Dichtungslippenkanten arbeiten unter Dichtungsbedingungen und der Grad des intervenierenden Kontakts nimmt stark zu, ist aber angemessen. Da im stabilen Betrieb die Temperatur hoch ist, arbeitet das Schmieröl bzw. -fett gut und der Grad des intervenierenden Kontakts ist angemessen, sodass das Schmieröl bzw. -fett gut abgedichtet wird und das Reibungsdrehmoment angemessen ist.

Vorzugsweise schrumpft bei normaler Temperatur beim Start des Radnabenlagers die Metallrahmenschicht an der Innenseite des doppellagigen Metallrahmens nach innen und führt zu einer Krümmung des Dichtungsteils nach innen und somit dazu, dass sich die radiale und die axiale Dichtungslippenkante gleichzeitig vom Dichtungsstoppring wegbewegen und der intervenierende Kontakt zwischen den Dichtungslippenkanten und dem Dichtungsstoppring des Lagers verringert wird, womit das Reibungsdrehmoment zwischen den Dichtungslippenkanten und dem Dichtungsstoppring verringert wird. Wahlweise kann sich bei normaler Temperatur beim Start die Metallrahmenschicht an der Innenseite des doppellagigen Metallrahmens im Normalzustand befinden, d. h. sie unterliegt weder einer Schrumpfung noch einer Ausdehnung.

Nach dem Start des Radnabenlagers bildet sich allmählich ein Schmierölfilm und die Lagertemperatur erhöht sich allmählich. Mit dem Temperaturanstieg dehnt sich die Metallrahmenschicht an der Innenseite des doppellagigen Metallrahmens nach außen aus, sodass das Dichtungsteil nach außen gekrümmt wird, die radiale und die axiale Dichtungslippenkante sich in Richtung auf den Dichtungsstoppring bewegen und sich der Grad des intervenierenden Kontakts zwischen den Dichtungslippenkanten und dem Dichtungsstoppring des Lagers erhöht, bis das Radnabenlager eine stabile Betriebstemperatur erreicht und die Metallrahmenschicht vom nach innen geschrumpften Zustand in den Normalzustand oder vom Normalzustand in den ausgedehnten Zustand übergeht.

Gemäß einem Ausführungsbeispiel der vorliegenden Erfindung sind die Dichtungslippenkanten des Lagers durch Spritzgießen an dem doppellagigen Metallrahmen gebildet.

Gemäß einem Ausführungsbeispiel der vorliegenden Erfindung ist der Dichtungsstoppring zu einer L-Form gekrümmt, wobei sein einer Schenkel in Richtung auf den Innenteil des Radnabenlagers erstreckt und am Innenring befestigt ist und die Dichtungslippenkanten eine erste radiale Dichtungslippenkante und eine zweite axiale Dichtungslippenkante umfassen, die separat mit den beiden Schenkeln des Dichtungsstopprings intervenierend in Kontakt stehen. Die mit dem am Innenring befestigten Schenkel intervenierend in Kontakt stehende erste radiale Dichtungslippenkante verhindert ein Entweichen des Öls bzw. Fetts und die zweite axiale Dichtungslippenkante verhindert das Eindringen von äußeren Verschmutzungen wie Wasser, Staub etc. in den Innenteil des Radnabenlagers. Das Reibungsdrehmoment des Radnabenlagers wird von der Reibung zwischen der ersten radialen Dichtungslippenkante und der zweiten axialen Dichtungslippenkante sowie dem Dichtungsstoppring verursacht, wobei das von der ersten radialen Dichtungslippenkante verursachte Reibungsdrehmoment größer ist als das von der zweiten axialen Dichtungslippenkante verursachte Reibungsdrehmoment. Die Form des doppellagigen Metallrahmens kann sich mit einer Temperaturänderung verändern und so das Reibungsdrehmoment zwischen der ersten radialen und der zweiten axialen Dichtungslippenkante sowie dem Dichtungsstoppring verändern.

Gemäß einem Ausführungsbeispiel der vorliegenden Erfindung dehnt sich die zweite axiale Dichtungslippenkante an der dem Dichtungsstoppring gegenüberliegenden Seitenfläche des Dichtungsteils in axialer auf den Außenteil des Radnabenlagers weisender Richtung aus.

Gemäß einem Ausführungsbeispiel der vorliegenden Erfindung dehnt sich die erste radiale Dichtungslippenkante an der dem Dichtungsstoppring gegenüberliegenden Seitenfläche des Dichtungsteils in radialer auf den Innenring weisender Richtung aus.

Vorzugsweise sind gemäß dem Ausführungsbeispiel der vorliegenden Erfindung an dem doppellagigen Metallrahmen Umfangsrichtungsschlitze angeordnet. Vorzugsweise sind die Umfangsrichtungsschlitze in Umfangsrichtung gleichmäßig angeordnet. Durch die Schlitze an dem doppellagigen Metallrahmen werden die aufgrund der Verformung auftretenden inneren Spannungen verringert. Somit kann unter der Voraussetzung einer bestimmten Festigkeit die Reaktion auf Temperaturveränderungen verbessert werden.

Die vorliegende Erfindung stellt außerdem ein Radnabenlager bereit, welches sich dadurch auszeichnet, dass es die oben beschriebene Radnabenlager-Dichtungsvorrichtung umfasst.

Im Vergleich zu üblichen Radnabenlagern weist ein Radnabenlager gemäß der vorliegenden Erfindung folgende Vorteile auf:
1. Der Aufbau ist einfach, es lässt sich leicht herstellen und die Fertigungskosten sind niedrig.
2. Mit der gleichzeitigen Regulierung des Interventionsgrades zwischen der radialen und der axialen Dichtungslippenkante sowie dem Dichtungsstoppring kann ein optimales Startdrehmoment erreicht werden.
3. Beim Start ist die Rotationsgeschwindigkeit niedrig, die Schmierung unzureichend und der Grad des intervenierenden Kontakts zwischen der radialen und der axialen Dichtungslippenkante sowie dem Dichtungsstoppring relativ gering und somit kann eine Dichtungswirkung bereitgestellt und das Startdrehmoment verringert werden.
4. Beim Start hat sich möglicherweise noch kein Schmierölfilm gebildet und der Grad des intervenierenden Kontakts zwischen der radialen sowie der axialen Dichtungslippenkante und dem Dichtungsstoppring ist relativ klein und somit kann wirksam verhindert werden, dass die trockene Reibung zwischen den Dichtungslippenkanten und dem Dichtungsstoppring Beschädigungen verursacht.
5. Beim Start wird die von der ersten radialen Dichtungslippenkante und der zweiten axialen Dichtungslippenkante verursachte Reibung verringert, womit ein größerer Anteil der Reibung verringert wird und somit auch das Startdrehmoment deutlich verringert wird.
6. Der intervenierende Kontakt zwischen der radialen und der axialen Dichtungslippenkante sowie dem Dichtungsstoppring wird von der Temperaturveränderung gesteuert und wenn die Temperatur sich nicht ändert, bleibt der Interventionsgrad stabil. Dies ist ausgesprochen gut geeignet für Dichtungen von Radnabenlagern.
7. Die Radnabenlager-Dichtungsvorrichtung verringert das Startdrehmoment bei gleichzeitiger Gewährleistung der Dichtungswirkung im Betriebszustand.

### Kurze Beschreibung der Zeichnungen

Eine bevorzugte Ausführungsform des erfindungsgemäß ausgebildeten Radnabenlagers wird nachfolgend anhand der beigefügten Zeichnungen näher erläutert. Dabei zeigen:
- Figur 1: eine Schnittdarstellung eines Radnabenlagers des Stands der Technik.
- Figur 1A: eine vergrößerte Darstellung des in Zusammenhang mit der Radnabenlager-Dichtungsvorrichtung stehenden Teils X in Figur 1.
- Figur 2A: eine schematische Darstellung zu dem mit Dichtungsteil verursachten Reibungsdrehmoment.
- Figur 2B: eine schematische Darstellungen zu dem ohne Dichtungsteil verursachten Reibungsdrehmoment.
- Figur 3: eine Schnittdarstellung einer Radnabenlager-Dichtungsvorrichtung gemäß der vorliegenden Erfindung.
- Figur 3A: eine vergrößerte Darstellung des in Zusammenhang mit der Radnabenlager-Dichtungsvorrichtung stehenden Teils X in Figur 3.
- Figur 4: eine schematische Darstellung eines doppellagigen Metallrahmens der Radnabenlager-Dichtungsvorrichtung gemäß der vorliegenden Erfindung.

### Ausführliche Beschreibung der Zeichnungen

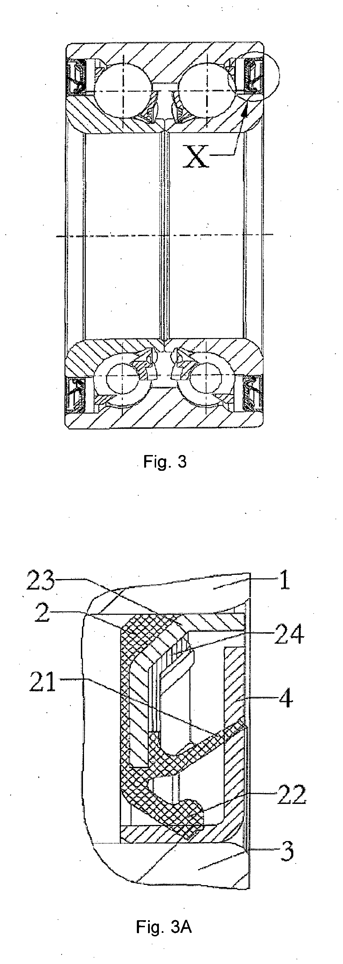

In der folgenden detaillierten Beschreibung des illustrierenden Ausführungsbeispiels werden in Verbindung mit Figur 3 bis 4 alle Merkmale und Aspekte der vorliegenden Erfindung erläutert.

Figur 3 zeigt eine Teil-Schnittdarstellung eines Radnabenlagers, das eine Radnabenlager-Dichtungsvorrichtung gemäß einem Ausführungsbeispiel der vorliegenden Erfindung umfasst. Figur 3A zeigt eine vergrößerte Darstellung des Teils X der in Figur 3 gezeigten Radnabenlager-Dichtungsvorrichtung.

In Figur 3 ist das Radnabenlager ein doppelreihiges Kugellager, umfassend einen Außenring 1; einen Innenring 3; einen Halterahmen (nicht dargestellt) zum Halten der zwei Kugelreihen (nicht dargestellt); ein Dichtungsteil 2 (beispielsweise aus einem Gummimaterial) zum Abdecken des abgegrenzten Raums zwischen Innenring 3 und Außenring 1; und einen in Axialrichtung des Radnabenlagers an der Außenseite des Dichtungsteils 2 angeordneten Dichtungsstoppring 4. Der Innenring 3, der Außenring 1, das Dichtungsteil 2 und der Dichtungsstoppring 4 bilden die Dichtungsvorrichtung des Radnabenlagers.

Wie in Figur 3A gezeigt, ist der Außenumfang des Dichtungsteils 2 am Außenring 1 befestigt und befindet sich zusammen mit dem Außenring 1 im ruhenden Zustand und der Dichtungsstoppring 4 ist am Innenring 3 befestigt und dreht sich gemeinsam mit dem Innenring 3. In Figur 3A ist der Dichtungsstoppring 4 eine ringförmige Metallplatte, die zu einer L-Form gebogen ist, wobei ein Schenkel in Richtung auf den Innenteil des Radnabenlagers erstreckt und am Innenring 3 befestigt ist. Außerdem ist am Innenteil des Dichtungsteils 2 ein Metallrahmen 23 angeordnet, wobei der Metallrahmen 23 genutzt wird, um den Außenumfang des Dichtungsteils 2 am Außenring 1 zu befestigen und der Metallrahmen 23 des Dichtungsteils 2 durch Spritzgießen hergestellt eine erste radiale Dichtungslippenkante 22 und eine zweite axiale Dichtungslippenkante 21 aufweist, die beiden Dichtungslippenkanten jeweils in Axialrichtung des Radlagers erstreckt sind und mit den beiden Schenkeln des L-förmigen Dichtungsstopprings 4 intervenierend in Kontakt stehen. Durch die Konfiguration des Grads des intervenierenden Kontakts zwischen den Dichtungslippenkanten und dem Dichtungsstoppring wird eine Dichtung realisiert, wobei die erste radiale Dichtungslippenkante 22 ein Entweichen von Öl bzw. Fett verhindert und die zweite axiale Dichtungslippenkante 21 das Eindringen von äußeren Verschmutzungen wie Wasser, Staub etc. in den Innenteil des Radnabenlagers verhindert.

Die dem Dichtungsteil 2 gegenüberliegende Seitenfläche des Dichtungsstopprings 4 ist als flache Oberfläche gebildet, die zur Seitenfläche des Dichtungsteils 2 parallel ist. Darüber hinaus weist der Innenteil des Dichtungsteils 2 noch eine weitere Metallrahmenschicht 24 auf, die in Radialrichtung an der Innenseite des Metallrahmens 23 angeordnet ist. Diese Metallrahmenschicht weist einen anderen Wärmeausdehnungskoeffizient auf als der Metallrahmen 23 und bildet daher mit dem Metallrahmen 23 einen doppellagigen Metallrahmen. Im vorliegenden Ausführungsbeispiel ist der Wärmeausdehnungskoeffizient des doppellagigen Metallrahmens so gewählt, dass sich bei Verringerung der Temperatur die Stärke der Überlagerung zwischen den Dichtungslippenkanten 21 und 22 sowie dem Dichtungsstoppring 4 verkleinert und bei Anstieg der Temperatur die Stärke der Überlagerung zwischen den Dichtungslippenkanten 21 und 22 sowie dem Dichtungsstoppring 4 steigt. Beispielsweise kann die Konfiguration so erfolgen, dass bei Starttemperatur die Metallrahmenschicht 24 der Innenseite nach innen schrumpft, während bei Betriebstemperatur die Metallrahmenschicht 24 der Innenseite in den Normalzustand zurückkehrt. Oder die Metallrahmenschicht 24 der Innenseite befindet sich bei Starttemperatur im Normalzustand, während sich bei Betriebstemperatur die Metallrahmenschicht 24 der Innenseite nach außen ausdehnt.

Die zweite axiale Dichtungslippenkante 21 an der dem Dichtungsstoppring 4 gegenüberliegenden Seitenfläche des Dichtungsteils 2 dehnt sich in axialer auf den Außenteil des Radnabenlagers weisender Richtung aus und die erste radiale Dichtungslippenkante 22 an der dem Dichtungsstoppring 4 gegenüberliegenden Seitenfläche des Dichtungsteils 2 dehnt sich in radialer auf den Innenring 3 weisender Richtung aus.

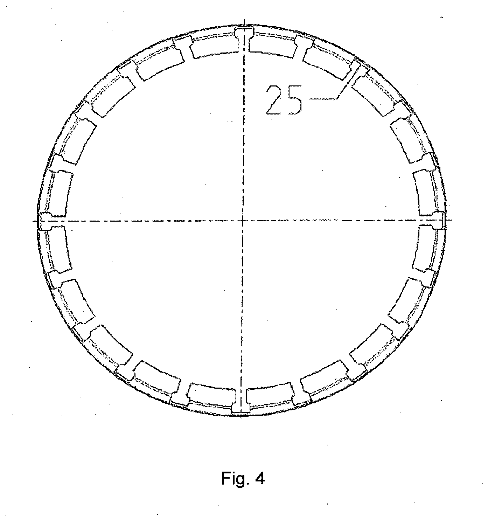

Um die bei der Verformung des doppellagigen Metallrahmens verursachten inneren Spannungen zu verringern, sind in Umfangsrichtung des doppellagigen Metallrahmens gleichmäßig Umfangsrichtungsschlitze 25 angeordnet, wie in Figur 4 gezeigt.

In der Radnabenlager-Dichtungsvorrichtung des Ausführungsbeispiels der vorliegenden Erfindung bilden der Dichtungsteil-Hauptkörper und der aus dem Metallrahmen 23 sowie der Metallrahmenschicht 24 gebildete doppellagige Metallrahmen gemeinsam das Dichtungsteil 2.

Im vorliegenden Ausführungsbeispiel schrumpft beim Start unter normaler Temperatur die Metallrahmenschicht 24 an der Innenseite des doppellagigen Metallrahmens nach innen und führt zu einer Krümmung des Dichtungsteils 2 nach innen, worauf sich die Dichtungslippenkanten 21 und 22 vom Dichtungsstoppring 4 wegbewegen, der Grad des intervenierenden Kontakts zwischen den Dichtungslippenkanten 21 und 22 des Radnabenlagers und dem Dichtungsstoppring 4 des Lagers sich verringert und sich somit das Reibungsdrehmoment zwischen den Dichtungslippenkanten 21 und 22 und dem Dichtungsstoppring 4 verringert. Aufgrund der niedrigen Temperatur in der Startphase ist der Grad des intervenierenden Kontakts gering und deshalb das Reibungsdrehmoment klein und gleichzeitig wird das Schmieröl bzw. -fett sehr gut abgedichtet. Somit wird das Startdrehmoment des Radnabenlagers verringert und gleichzeitig die Staubschutz- und Dichtungswirkung gewährleistet.

Nach dem Start des Radnabenlagers bildet sich allmählich ein Schmierölfilm und die Lagertemperatur erhöht sich allmählich. Mit dem Ansteigen der Temperatur dehnt sich die Metallrahmenschicht 24 der Innenseite des doppellagigen Metallrahmens nach außen aus, sodass das Dichtungsteil 2 nach außen gekrümmt wird, woraufhin sich die Dichtungslippenkanten 21 und 22 in Richtung auf den Dichtungsstoppring 4 bewegen, der Grad des intervenierenden Kontakts zwischen den Dichtungslippenkanten 21 und 22 des Lagers und dem Dichtungsstoppring 4 zunimmt, bis das Radnabenlager eine stabile Betriebstemperatur erreicht und die Metallrahmenschicht 24 in den Normalzustand zurückkehrt. Zu diesem Zeitpunkt hat sich ein guter Ölfilm gebildet, die Dichtungslippenkanten 21 und 22 arbeiten unter Dichtungsbedingungen und der Grad des intervenierenden Kontakts ist angemessen.

Oben stehend wurde in Verbindung mit einem veranschaulichenden Ausführungsbeispiel die vorliegende Erfindung beschrieben. Allerdings kann ein Fachmann des technischen Gebiets mit Hilfe der Beschreibung und der beigefügten Figuren der vorliegenden Erfindung weitere Formveränderungen und Ersetzungen vornehmen. Beispielsweise dehnt sich im Ausführungsbeispiel die zweite axiale Dichtungslippenkante 21 an der dem Dichtungsstoppring 4 gegenüberliegenden Seitenfläche des Dichtungsteils 2 in axialer auf den Außenteil des Radnabenlagers weisender Richtung aus und der Dichtungsstoppring 4 ist am Innenring 3 befestigt. Die zweite axiale Dichtungslippenkante kann sich aber auch an der dem Dichtungsstoppring gegenüberliegenden Seitenfläche des Dichtungsteils in radialer auf den Innenring weisender Richtung ausdehnen und der Dichtungsstoppring kann auch direkt an der Achse befestigt sein, an der das Radnabenlager montiert ist. Somit ist die vorliegende Erfindung nicht auf das oben beschriebene Ausführungsbeispiel beschränkt, sondern es können innerhalb des in den Patentansprüchen angegebenen Umfangs an der vorliegenden Erfindung Korrekturen und Veränderungen vorgenommen werden. Die Intention der vorliegenden Erfindung umfasst sämtliche dieser Formveränderungen und Ersetzungen und diese fallen in den Umfang der angehängten Patentansprüche sowie deren äquivalenter Gegenstände.

### Bezugszeichenliste

- 1': Außenring
- 2': Dichtungsteil
- 3': Innenring
- 4': Dichtungsstoppring
- 21': zweite axiale Dichtungslippenkante
- 22': erste radiale Dichtungslippenkante
- 23': Metallrahmen

- 1: Außenring
- 2: Dichtungsteil
- 3: Innenring
- 4: Dichtungsstoppring
- 21: zweite axiale Dichtungslippenkante
- 22: erste radiale Dichtungslippenkante
- 23: Metallrahmen
- 24: Metallrahmenschicht
- 25: Schlitz

## Patentansprüche

1. Dichtungsvorrichtung für ein Radnabenlager, umfassend einen Außenring (1) und einen Innenring (3) des Radnabenlagers, ein ringförmiges Dichtungsteil (2) und einen Dichtungsstoppring (4), wobei der Dichtungsstoppring (4) am Innenring (3) befestigt ist, der Außenumfang des Dichtungsteils (2) am Außenring (1) befestigt ist, im Innenteil des Dichtungsteils (2) ein Metallrahmen (23) angeordnet ist, der Metallrahmen (23) genutzt wird, um den Außenumfang des Dichtungsrings am Außenring (1) zu befestigen und das Dichtungsteil (2) an dem Metallrahmen (23) eine Dichtungslippenkante (22) aufweist, wobei die Dichtungslippenkante (22) mit dem Dichtungsstoppring (4) intervenierend in Kontakt steht, **dadurch gekennzeichnet, dass** das Dichtungsteil (2) im Innenteil eine weitere Metallrahmenschicht (24) aufweist, die in Radialrichtung an der Innenseite des Metallrahmens (23) angeordnet ist, einen anderen Wärmeausdehnungskoeffizient aufweist als der Metallrahmen (23) und mit dem Metallrahmen (23) einen doppellagigen Metallrahmen (23, 24) bildet, wobei der doppellagige Metallrahmen (23, 24) so konstruiert ist, dass er verwendet werden kann, um im Betrieb der Dichtungsvorrichtung bei einer Temperaturveränderung dynamisch die Stärke der Überlagerung zwischen der Dichtungslippenkante (22) und dem Dichtungsstoppring (4) zu regulieren.

2. Dichtungsvorrichtung nach Anspruch 1, **dadurch gekennzeichnet, dass** der doppellagige Metallrahmen (23, 24) so konstruiert ist, dass sich bei einem Temperaturanstieg die Stärke der Überlagerung zwischen der Dichtungslippenkante (22) und dem Dichtungsstoppring (4) erhöht.

3. Dichtungsvorrichtung nach Anspruch 1, **dadurch gekennzeichnet, dass** die Dichtungslippenkante (22) des Lagers durch Spritzgießen an dem doppellagigen Metallrahmen (23, 24) gebildet ist.

4. Dichtungsvorrichtung nach Anspruch 2, **dadurch gekennzeichnet, dass** der doppellagige Metallrahmen (23, 24) so konstruiert ist, dass er sich beim Start des Radnabenlagers in einem nach innen geschrumpften Zustand befindet, während er sich im Betriebszustand des Radnabenlagers im Normalzustand befindet.

5. Dichtungsvorrichtung nach Anspruch 2, **dadurch gekennzeichnet, dass** der doppellagige Metallrahmen (23, 24) so konstruiert ist, dass er sich beim Start des Radnabenlagers im Normalzustand befindet, während er sich im Betriebszustand des Radnabenlagers in einem ausgedehnten Zustand befindet.

6. Dichtungsvorrichtung nach einem der Ansprüche 1 bis 5, **dadurch gekennzeichnet, dass** an dem doppellagigen Metallrahmen (23, 24) in Umfangsrichtung Schlitze (25) angeordnet sind.

7. Dichtungsvorrichtung nach einem der Ansprüche 1 bis 5, **dadurch gekennzeichnet, dass** der Dichtungsstoppring (4) im Profil eine L-Form aufweist, wobei sein einer Schenkel in Richtung auf den Innenteil des Radnabenlagers erstreckt und am Innenring (3) befestigt ist, wobei die erste radiale Dichtungslippenkante (22) eine zweite axiale Dichtungslippenkante (21) umfasst und beide Dichtungslippenkanten (21, 22) separat mit den beiden Schenkeln des Dichtungsstopprings (4) intervenierend in Kontakt stehen.

8. Dichtungsvorrichtung nach Anspruch 7, **dadurch gekennzeichnet, dass** sich die zweite axiale Dichtungslippenkante (21) an der Seitenfläche des Dichtungsteils (2) in axialer auf den Außenteil des Radnabenlagers weisender Richtung ausdehnt und die Seitenfläche dem Dichtungsstoppring (4) gegenüberliegt.

9. Dichtungsvorrichtung nach Anspruch 7, **dadurch gekennzeichnet, dass** sich die erste radiale Dichtungslippenkante (22) an der Seitenfläche des Dichtungsteils (2) in radialer auf den Innenring weisender Richtung ausdehnt und die Seitenfläche dem Dichtungsstoppring (4) gegenüberliegt.

10. Radnabenlager, **dadurch gekennzeichnet, dass** es eine Dichtungsvorrichtung nach einem der Ansprüche 1 bis 9 umfasst.
